# FASCICULE DE BREVET EUROPEEN

(11) **EP 4 173 456 B1**
(45) Date de publication et mention de la délivrance du brevet: **17.01.2024**
(21) Numéro de dépôt: 22199718.2
(22) Date de dépôt: 05.10.2022
(51) Int. Cl.: A01B 19/02, A01B 61/04, A01B 23/02, A01B 19/10

(54) **MACHINE DE TRAVAIL DU SOL**
BODENBEARBEITUNGSMASCHINE
SOIL WORKING MACHINE

(30) Priorité: 28.10.2021 FR 2111475
(43) Date de publication de la demande: 03.05.2023
(73) Titulaire: Carre S.A.S., 85140 Saint-Martin-des-Noyers (FR)
(72) Inventeur: RAMBAUD, Fabrice, 85140 SAINT-MARTIN-DES-NOYERS (FR)
(74) Mandataire: Ipsilon

(56) Documents cités:
- AU-A- 2 588 871
- FR-A1- 3 102 645
- IT-A1- RM20 110 069
- SU-A1- 882 439

## Description

La présente invention concerne une machine de travail du sol.

Elle concerne en particulier une machine de travail du sol comprenant un châssis mobile avec une partie avant et une partie arrière pris par rapport au sens de déplacement du châssis et des ensembles de travail du sol, le châssis présentant au moins une traverse s'étendant transversalement à la direction avant/arrière du châssis, et au moins deux des ensembles de travail du sol couplables à la traverse comprenant chacun :
- une chape,
- un bras porte-outil monté sur la chape à pivotement autour d'un axe parallèle à l'axe longitudinal de la traverse à l'état couplé dudit ensemble à la traverse, pour permettre notamment un effacement de l'outil de travail du sol par soulèvement lors de la rencontre avec un obstacle,
- un ressort de rappel du bras en position d'appui au sol de l'outil comprenant une partie dite intermédiaire spiralée et deux branches reliées entre elles par ladite partie spiralée et,
- une structure pivotante de précontrainte du ressort, le bras pivotant couplé à l'une des branches du ressort et la structure pivotante active par appui sur l'autre branche du ressort étant montés sur la chape à pivotement autour d'un même axe autour duquel la partie spiralée du ressort est au moins partiellement enroulée, pour permettre à l'état entraîné en déplacement à pivotement de la structure pivotante par au moins un dispositif d'entraînement en déplacement équipant la machine une précontrainte (compression) du ressort en fonction des positions angulaires relatives du bras et de la structure pivotante.

Une telle machine de travail du sol est connue comme l'illustre le brevet FR-3.102.645.

Une telle machine de travail du sol permet lorsque les outils sont par exemple des dents d'assurer un désherbage mécanique. En effet, la vibration des dents encore appelées peigne permet une déstructuration de la surface du sol et un déracinement des jeunes adventices. En plus de la déstructuration des adventices, le travail d'écroûtage facilite l'aération du sol, accélère le réchauffement, permet d'augmenter l'activité microbienne du sol, d'économiser l'eau et de faciliter l'enracinement de la plante. Dans le cas d'outils de travail réalisés sous forme de dents, ceux-ci sont constitués d'un fil de diamètre par exemple de 8 mm et la déstructuration du sol s'opère sur une profondeur de 2 à 3 cm. Pour obtenir un travail efficace, les dents doivent être, sur une largeur de travail, écartées l'une de l'autre d'une distance voisine de 25 mm. Il en résulte un grand nombre de dents sur une largeur de travail. Parallèlement, chaque outil de travail du sol doit pouvoir s'effacer lors de la rencontre avec un obstacle et doit pouvoir disposer d'une force d'appui au sol réglable pour travailler des sols plus ou moins durs. La difficulté de telles machines de travail du sol dont le nombre d'outils de travail du sol est particulièrement élevé réside dans la maintenance de ladite machine. En effet, la casse d'un outil ou son usure qui nécessitent le changement dudit outil sont des opérations fréquentes. On est donc à la recherche de solutions permettant un changement rapide et aisé d'un ensemble de travail du sol pour faciliter la maintenance de la machine et éviter une durée d'immobilisation trop importante.

Un but de l'invention est de proposer une machine de travail du sol dont la conception permet un changement rapide et aisé d'un ensemble de travail du sol.

A cet effet, l'invention a pour objet une machine de travail du sol comprenant un châssis mobile avec une partie avant et une partie arrière pris par rapport au sens de déplacement du châssis et des ensembles de travail du sol, le châssis présentant au moins une traverse s'étendant transversalement à la direction avant/arrière du châssis, et au moins deux des ensembles de travail du sol couplables à la traverse comprenant chacun :
- une chape,
- un bras porte-outil monté sur la chape à pivotement autour d'un axe parallèle à l'axe longitudinal de la traverse à l'état couplé dudit ensemble à la traverse, pour permettre notamment un effacement de l'outil de travail du sol par soulèvement lors de la rencontre avec un obstacle,
- un ressort de rappel du bras en position d'appui au sol de l'outil comprenant une partie dite intermédiaire spiralée et deux branches reliées entre elles par ladite partie spiralée et,
- une structure pivotante de précontrainte du ressort, le bras pivotant couplé à l'une des branches du ressort et la structure pivotante active par appui sur l'autre branche du ressort étant montés sur la chape à pivotement autour d'un même axe autour duquel la partie spiralée du ressort est au moins partiellement enroulée, pour permettre à l'état entraîné en déplacement à pivotement de la structure pivotante par au moins un dispositif d'entraînement en déplacement équipant la machine une précontrainte du ressort en fonction des positions angulaires relatives du bras et de la structure pivotante, caractérisée en ce que pour la ou au moins l'une des traverses du châssis, le ou au moins l'un des dispositifs d'entraînement en déplacement équipant la machine est commun au moins à plusieurs ensembles de travail du sol disposés côte à côte et couplés à ladite traverse et comprend au moins une tringle parallèle à la traverse, un actionneur d'entraînement en déplacement de la tringle de manière parallèle à elle-même dans le sens d'un rapprochement ou d'un écartement de la partie avant du châssis, la structure pivotante des ensembles de travail du sol montés sur la traverse est un levier pivotant couplable par encliquetage à la tringle pour permettre en parallèle du déplacement de la tringle un déplacement à pivotement des leviers et chaque ensemble de travail du sol porté par la traverse est couplé de manière individuelle à la traverse par au moins un organe de liaison s'étendant entre la chape dudit ensemble de travail du sol et la traverse.

La liaison de chaque ensemble de travail du sol directement à une traverse du châssis par un organe de liaison qui peut être unique et le couplage par encliquetage, c'est-à-dire par simple emboîtement élastique, de la structure pivotante de précontrainte du ressort à une tringle du châssis permettant un montage et un démontage aisés dudit ensemble de travail du sol sans avoir à démonter les autres ensembles de travail du sol et sans avoir à agir sur le dispositif d'entraînement en déplacement à pivotement de la structure pivotante de précontrainte du ressort. Il en résulte un gain de temps lors de la maintenance ou lors de la première monte.

Selon un mode de réalisation de l'invention, chaque levier pivotant est pour son couplage par encliquetage, c'est-à-dire par emboîtement par déformation élastique, à la tringle, muni à son extrémité d'un crochet venant en prise avec la tringle. Il en résulte une simplicité de couplage. De préférence, le crochet et le levier sont réalisés d'une seule pièce.

Selon un mode de réalisation de l'invention, ledit crochet a la forme d'un C avec chaque extrémité du C se prolongeant pour former une aile, lesdites ailes divergentes depuis les extrémités du C formant entre elles un guide d'entrée en V débouchant à l'intérieur du C, lesdites ailes s'écartant au passage d'insertion de la tringle à l'intérieur du C. A nouveau, cette disposition permet un montage rapide de chaque ensemble de travail du sol à structure pivotante.

Selon un mode de réalisation de l'invention, ledit crochet vient coiffer par le dessus la tringle.

Selon un mode de réalisation de l'invention, la chape de fixation d'au moins l'un des ensembles de travail du sol à la ou l'une des traverses du châssis est munie d'au moins un loquet de verrouillage du bras à la chape dans une position dans laquelle l'outil porté par le bras est écarté du sol, ce loquet étant monté mobile entre une position active de verrouillage et une position inactive déverrouillée. La présence d'un tel loquet permet, lorsque cela est nécessaire, de maintenir l'outil de travail du sol de l'ensemble de travail du sol dans une configuration inactive. Le déplacement à pivotement du bras dans le sens d'un soulèvement pour entraîner un déplacement de l'outil dans le sens d'un écartement du sol est généralement réalisé manuellement. L'actionnement du loquet de verrouillage pour le maintien du bras dans ladite position s'opère également généralement manuellement.

Selon un mode de réalisation de l'invention, le loquet qui est monté mobile à pivotement et à coulissement entre une position active de verrouillage et une position inactive déverrouillée est un loquet coulissant suivant une direction parallèle à l'axe de pivotement du bras, et pivotant autour d'un axe parallèle à l'axe de pivotement du bras.

Selon un mode de réalisation de l'invention, le loquet a la forme d'un bout d'axe muni d'un doigt radial et la chape est munie d'un oeillet à l'intérieur duquel le bout d'axe s'insère au moins partiellement en position active de verrouillage dudit loquet.

Selon un mode de réalisation de l'invention, l'outil de travail du sol d'au moins deux des ensembles de travail du sol couplables à la traverse est une dent pour conférer à la machine de travail du sol une fonction de herse.

Selon un mode de réalisation de l'invention, la chape d'au moins deux des ensembles de travail du sol couplables à la traverse est une chape avec une partie en forme de U, le ressort, le bras et la structure pivotante étant disposés au moins partiellement entre les branches du U et l'organe de liaison de la chape à la traverse étant disposé au niveau de l'âme du U. Il en résulte un ensemble de travail du sol particulièrement compact.

Selon un mode de réalisation de l'invention, au moins la chape, le bras et la structure pivotante d'au moins deux des ensembles de travail du sol couplables à la traverse sont des pièces moulées en matière de synthèse. La fabrication d'un tel ensemble de travail du sol est ainsi aisée. De préférence, le loquet de verrouillage, lorsqu'il est présent, est également en matière de synthèse.

### Brève description des dessins

L'invention sera bien comprise à la lecture de la description suivante d'exemples de réalisation, en référence aux dessins annexés dans lesquels :
[Fig. 1] représente une vue en perspective d'une machine de travail du sol conforme à l'invention ;

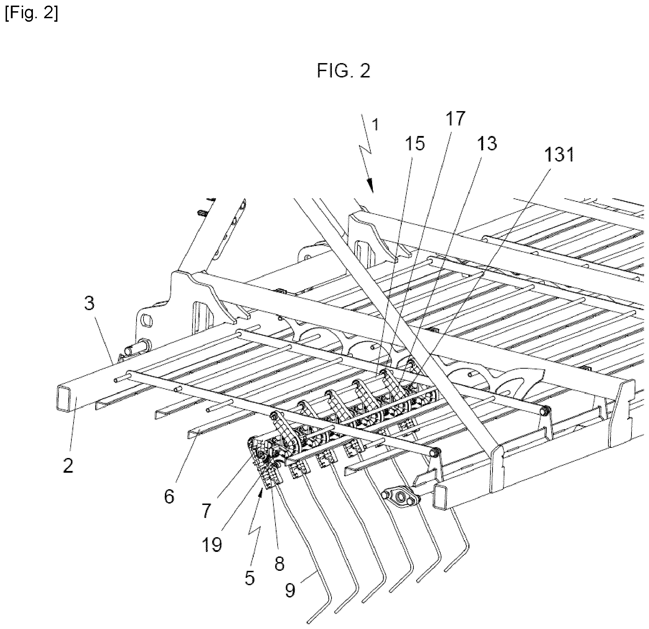

[Fig. 2] représente une vue partielle en perspective d'une machine de travail du sol conforme à l'invention ;
[Fig. 3] représente une vue de côté d'un ensemble de travail du sol d'une machine de travail du sol conforme à l'invention ;

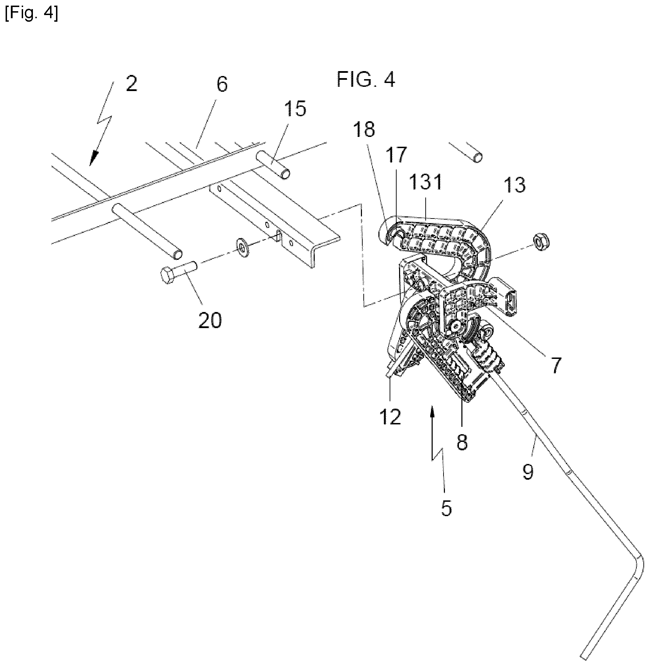

[Fig. 4] représente une vue en perspective d'un ensemble de travail du sol prêt à être couplé au châssis d'une machine de travail du sol conforme à l'invention ;
[Fig. 5] représente une vue en perspective en position éclatée des éléments le constituant d'un ensemble de travail du sol conforme à l'invention ;

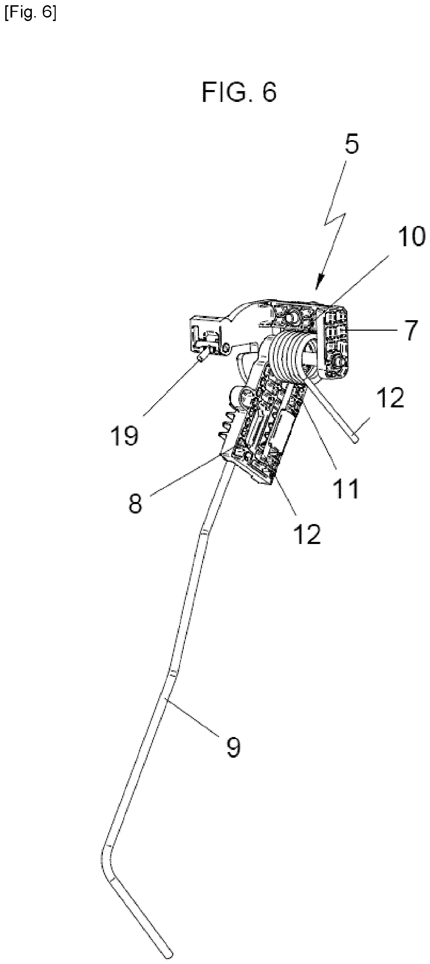

[Fig. 6] représente une vue en perspective d'un ensemble de travail du sol, la structure pivotante ayant été omise pour mieux voir l'intérieur dudit ensemble ;

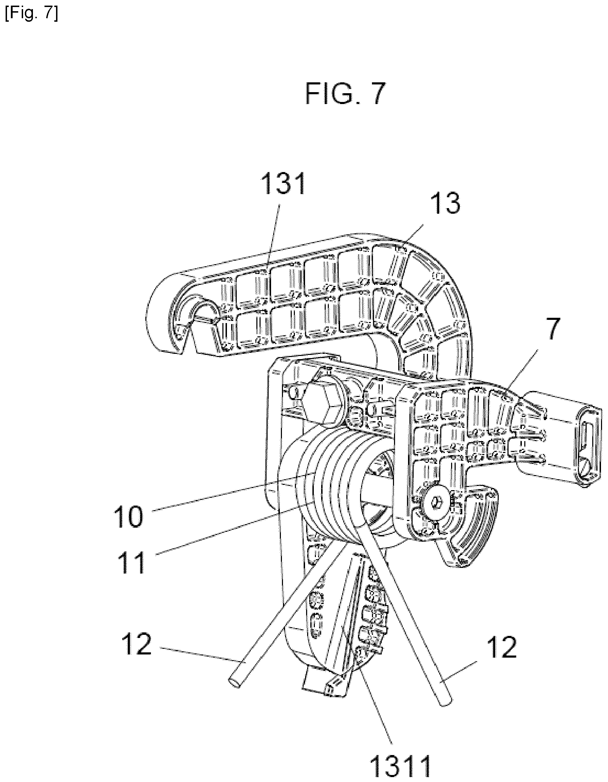

[Fig. 7] représente une vue en perspective d'un ensemble de travail du sol, le bras porte-outil ayant été omis pour mieux voir l'intérieur dudit ensemble ;
[Fig. 8] représente une vue de détail en perspective d'un loquet de verrouillage d'un bras d'un ensemble de travail du sol en position haute écartée du sol, ledit loquet de verrouillage étant en position inactive déverrouillée ;
[Fig. 9] représente une vue de détail en perspective d'un loquet de verrouillage d'un bras d'un ensemble de travail du sol en position haute écartée du sol, ledit loquet de verrouillage étant en position active verrouillée ;
[Fig. 10] représente une vue de côté d'un ensemble de travail du sol associé à un dispositif d'entraînement en déplacement à pivotement de la structure pivotante dudit ensemble à l'état non contraint du ressort dudit ensemble de travail du sol ;
[Fig. 11] représente une vue de côté d'un ensemble de travail du sol associé à un dispositif d'entraînement en déplacement à pivotement de la structure pivotante dudit ensemble à l'état de précontrainte maximale du ressort dudit ensemble de travail du sol ;
[Fig. 12] représente une vue en perspective d'un ensemble de travail du sol associé à un dispositif d'entraînement en déplacement à pivotement de la structure pivotante dudit ensemble à l'état verrouillé du bras porte-outil en position haute.

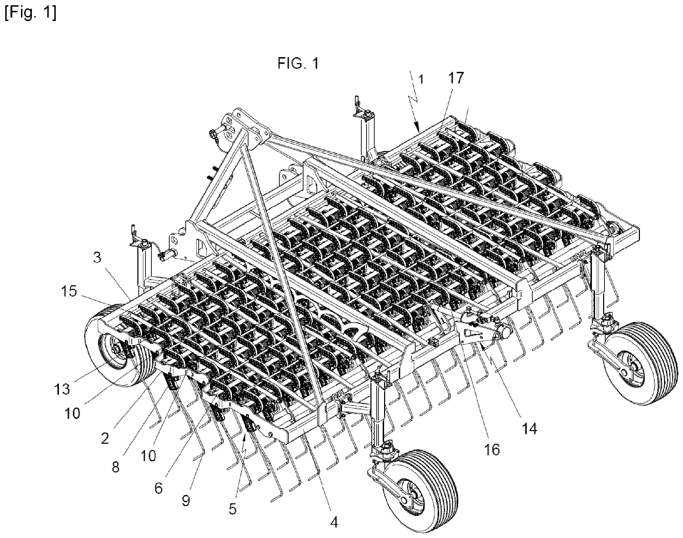

L'invention a pour objet une machine 1 de travail du sol qui peut être conforme à celle représentée à la figure 1. Cette machine 1 de travail du sol comprend un châssis 2 mobile avec une partie avant 3 et une partie arrière 4 pris par rapport au sens de déplacement du châssis 2, et des ensembles 5 de travail du sol.

Le châssis 2 mobile peut être un châssis automoteur ou attelable à un véhicule tracteur comme dans l'exemple représenté où la partie avant 3 du châssis 2 est celle équipée de l'attelage au véhicule tracteur. Ce châssis a, dans l'exemple représenté, la forme d'un cadre supporté par des roues. Ce châssis 2 comprend, à l'intérieur du cadre, une pluralité de traverses 6 parallèles s'étendant transversalement à la direction avant/arrière du châssis 2. Ce châssis 2 aurait pu, de manière équivalente, ne comporter qu'une seule traverse 6 sans sortir du cadre de l'invention.

Chaque traverse 6 présente un axe longitudinal. Chaque traverse 6 est ici formée d'une cornière en L mais aurait pu être formée par une poutre creuse ou pleine, ou un profilé de forme quelconque sans sortir du cadre de l'invention.

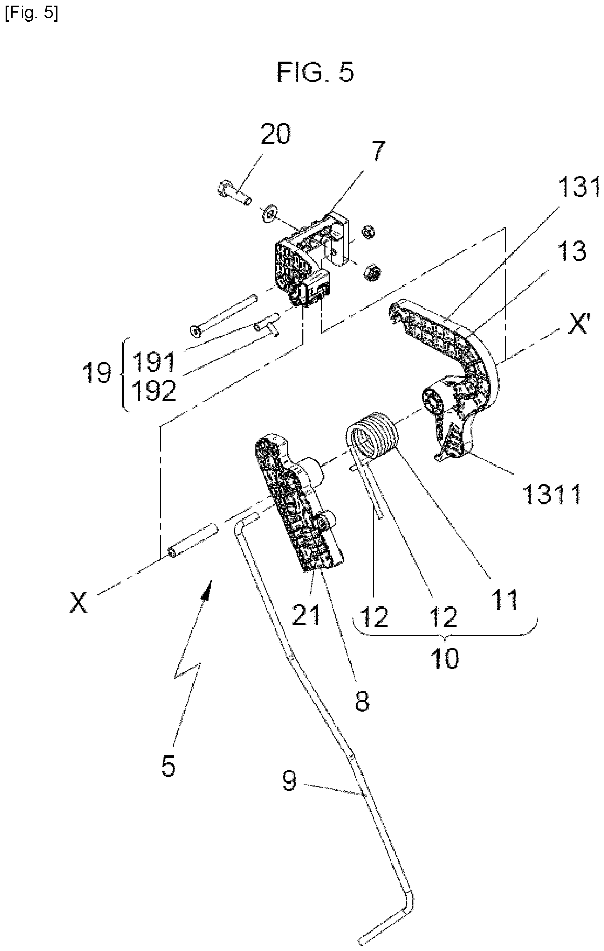

Au moins deux des ensembles 5 de travail du sol, ici chaque ensemble 5 de travail du sol, couplable à une même traverse 6, comprend une chape 7, un bras 8 porte-outil 9 monté sur la chape 7 à pivotement autour d'un axe XX' parallèle à l'axe longitudinal de la traverse 6 à l'état couplé dudit ensemble 5 à la traverse 6, pour permettre notamment un effacement de l'outil 9 de travail du sol par soulèvement lors de la rencontre avec un obstacle, un ressort 10 de rappel du bras 8 en position d'appui au sol de l'outil 9 comprenant une partie dite intermédiaire spiralée 11 et deux branches 12 reliées entre elles par ladite partie spiralée 11, et une structure 13 pivotante de précontrainte du ressort 10. Un ensemble 5 de travail du sol va être décrit plus en détail ci-après. Un tel ensemble de travail du sol est notamment représenté à la figure 5.

La chape 7 de l'ensemble 5 de travail du sol présente ici une partie en forme de U ouvert vers le sol à l'état couplé de l'ensemble 5 de travail du sol à la traverse 6. Ce U comprend une âme et deux branches. Ce U forme un étrier entre les branches duquel le ressort 10, le bras 8 et la structure 13 dudit ensemble 5 de travail du sol sont disposés au moins partiellement.

Cette chape 7, de même que le bras 8 porte-outil et la structure 13 pivotante sont des pièces moulées en matière de synthèse. Pour permettre le couplage de manière individuelle de chaque ensemble 5 de travail du sol à une traverse 6, un organe 20 de liaison s'étend entre la chape 7 dudit ensemble 5 de travail du sol et la traverse 6. En particulier, cet organe 20 de liaison s'étend entre la chape 7 et la traverse 6 et est disposé au niveau de l'âme du U de la chape 7.

Dans les exemples représentés, cet organe 20 de liaison est un boulon qui traverse la chape 7 et la traverse 6.

La seule fixation de cet organe 20 de liaison permet le couplage de l'ensemble 5 de travail du sol à la traverse 6. Il en résulte une simplicité de couplage et la possibilité de démonter un ensemble 5 de travail du sol sans démonter les ensembles 5 de travail du sol adjacents.

Chaque branche du U de la chape 7 est, quant à elle, munie d'un perçage pour la réception d'un organe de liaison de la chape 7, du bras 8 porte-outil et de la structure 13 pivotante de sorte que le bras 8 et la structure 13 pivotante sont, à l'état assemblé à la chape 7, montés mobiles à pivotement autour dudit organe de liaison.

Cet organe de liaison est généralement formé par une vis ou un goujon associé à un écrou comme dans l'exemple représenté. Cet organe de liaison est donc coaxial à l'axe XX' de pivotement du bras 8 porte-outil et à l'axe de pivotement de la structure 13 pivotante, lesdits axes étant confondus. Le ressort 10 est, quant à lui, disposé entre le bras 8 porte-outil et la structure 13 pivotante. Ce ressort 10 est un ressort de torsion et la partie spiralée 11 du ressort 10 entoure l'organe de liaison et par suite, l'axe XX' de pivotement du bras 8 porte-outil et donc également l'axe de pivotement de la structure 13 pivotante confondu avec l'axe XX' de pivotement du bras 8 porte-outil. Ainsi le bras 8 porte-outil, la structure 13 pivotante et la partie spiralée 11 du ressort 10 sont coaxiaux.

L'une des branches 12 du ressort 10 est couplée au bras 8 porte-outil. Cette branche 12 du ressort 10 et le bras 8 porte-outil sont solidaires en déplacement. L'autre branche 12 du ressort 10 est apte à être sollicitée par la structure 13 pivotante. En effet, la structure 13 pivotante est active par appui sur la branche 12 du ressort 10.

Dans les exemples représentés, la structure 13 pivotante est un levier 131 pivotant à deux branches ici en forme de L. Une partie du levier 131 qui fait face au bras 8 porte-outil est munie d'une partie en saillie qui forme une surface 1311 active par l'intermédiaire de laquelle le levier 131 agit par appui sur l'une des branches 12 du ressort 10. Cette surface 1311 active du levier 131 pivotant est plus particulièrement visible à la figure 5.

Ainsi, le bras 8 pivotant porte-outil couplé à l'une des branches 12 du ressort 10 et la structure 13 pivotante active par appui sur l'autre branche 12 du ressort 10 sont montés, sur la chape 7, à pivotement autour d'un même axe autour duquel la partie spiralée 11 du ressort 10 est au moins partiellement enroulée pour permettre, à l'état entraîné en déplacement à pivotement de la structure 13 pivotante par au moins un dispositif 14 d'entraînement en déplacement équipant la machine 1 et qui sera décrit ci-après, une précontrainte, c'est-à-dire une compression du ressort 10 en fonction des positions angulaires relatives du bras 8 et de la structure 13 pivotante.

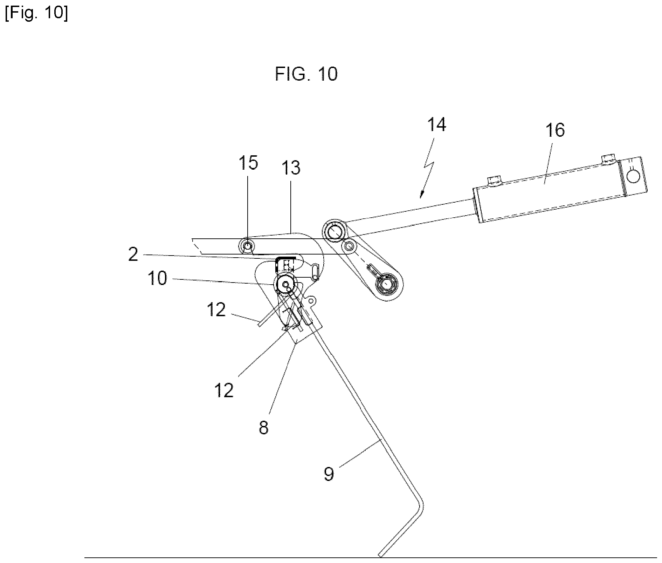

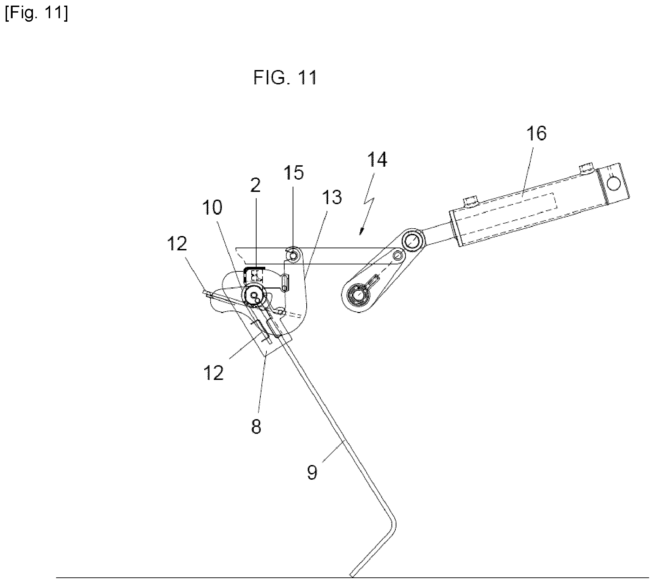

En effet, le déplacement des branches 12 du ressort 10 dans le sens d'un écartement l'une de l'autre assure une compression du ressort. C'est ce déplacement relatif des branches qui assure une précontrainte du ressort 10. Ce déplacement est illustré par passage de la figure 10 où la position angulaire relative du levier 131 pivotant et du bras porte-outil autour de l'axe de pivotement du levier 131 et du bras 8 porte-outil est une position dans laquelle le ressort 10 n'est pas soumis à une contrainte par le levier 131 à la figure 11 où la position angulaire relative du levier 131 pivotant et du bras 8 porte-outil autour de l'axe de pivotement du levier 131 et du bras 8 porte-outil est une position dans laquelle le ressort 10 est soumis à une contrainte maximale par le levier 131.

On comprend que plus la précontrainte du ressort 10 est élevée, plus la force d'appui au sol de l'outil 9 de travail équipant le bras 8 est importante lorsque le bras 8 porte-outil est libre de pivoter autour de son axe de pivotement.

Le réglage de la position angulaire relative du bras 8 porte-outil et du levier 131 pivotant s'opère donc en fonction de la force d'appui au sol souhaitée au niveau de l'outil 9 du travail du sol du bras 8 porte-outil.

Pour permettre un déplacement à pivotement de la structure 13 pivotante de l'ensemble 5 de travail du sol, la machine 1 comprend un dispositif 14 d'entraînement en déplacement de ladite structure 13 pivotante.

Comme mentionné ci-dessus, plusieurs ensembles 5 de travail du sol sont couplés à une même traverse 6 et sont disposés côte à côte le long de ladite traverse 6. De manière caractéristique à l'invention pour la ou au moins l'une des traverses 6 ainsi équipée, le dispositif 14 d'entraînement en déplacement à pivotement de la structure 13 pivotante de l'un des ensembles de travail du sol couplé à ladite traverse 6 permet en parallèle l'entraînement en déplacement à pivotement de la structure 13 pivotante des autres ensembles 5 de travail du sol couplés à ladite traverse 6. Ainsi, le dispositif 14 d'entraînement en déplacement à pivotement est commun à plusieurs ensembles 5 de travail du sol couplés à une même traverse pour permettre en parallèle un déplacement de la structure 13 pivotante de chaque ensemble 5 de travail.

Dans le cas où il est prévu plusieurs traverses 6 parallèles portant chacune une pluralité d'ensembles 5 de travail du sol, comme dans l'exemple représenté à la figure 1, le dispositif 14 d'entraînement en déplacement à pivotement de la machine peut être commun aux ensembles de travail du sol portés par plusieurs traverses 6.

Dans les exemples représentés, ce dispositif 14 d'entraînement en déplacement à pivotement de la structure 13 pivotante des ensembles 5 de travail du sol équipant une même traverse 6 comprend une tringle 15 parallèle à la traverse 6 et un actionneur 16, tel qu'un vérin, d'entraînement en déplacement de la tringle 15 de manière parallèle à elle-même dans le sens d'un rapprochement ou d'un écartement de la partie avant 3 du châssis 2.

La structure 13 pivotante de chaque ensemble 5 de travail du sol monté sur la traverse 6 est un levier 131 pivotant couplable par encliquetage à la tringle 15 pour permettre, en parallèle du déplacement de la tringle 15, un déplacement à pivotement des leviers 131.

Le détail de ce montage et du déplacement qui en résulte est illustré par exemple aux figures 10 et 11 et à la figure 1.

L'actionneur 16 agit sur l'entraînement en déplacement d'au moins deux premières bielles parallèles qui elles-mêmes sont couplées par au moins deux secondes bielles parallèles à la tringle 15. La sortie et la rentrée de la tige du vérin constitutif de l'actionneur 16 entraîne donc un déplacement de la tringle 15. Lorsque les secondes bielles sont communes à plusieurs tringles 15 parallèles, comme représenté à la figure 1, un même actionneur peut générer en parallèle le déplacement en parallèle de plusieurs tringles 15.

Grâce à ce montage, la ou chaque tringle 15, dans le cas d'une pluralité de tringles 15, est une tringle mobile qui se déplace parallèlement à elle-même en suivant une trajectoire courbe. Cette tringle 15 est ainsi apte à passer d'une position dans laquelle elle s'étend au-dessus et en avant ou à l'aplomb d'une traverse 6 à laquelle elle est associée, à une position dans laquelle elle s'étend à l'aplomb ou en arrière de la traverse 6 à laquelle elle est associée.

Dans sa version la plus simple, le châssis 2 comprend une tringle 15 et une traverse 6. Lorsque le châssis comprend plusieurs tringles, ces dernières sont reliées entre elles par les secondes bielles de liaison pour permettre un déplacement simultané desdites tringles. Le châssis comprend généralement autant de tringles que de traverses.

Les figures 10 et 11 illustrent les déplacements pour un seul levier 131 pivotant mais le fonctionnement est bien sûr similaire pour chaque levier 131 pivotant de chaque ensemble 5 de transmission couplé à la traverse 6 et en prise avec la tringle 15.

L'absence de précontrainte du ressort 10, correspond ici à la figure 10, et à une position du levier 131 pivotant dans laquelle la tige du vérin constitutif de l'actionneur 16 est sortie, tandis que la précontrainte maximale du ressort 10, correspond ici à la figure 11, et à une position du levier 131 pivotant dans laquelle la tige du vérin constitutif de l'actionneur 16 est rentrée. La commande de l'actionneur 14 peut s'opérer à partir du véhicule tracteur.

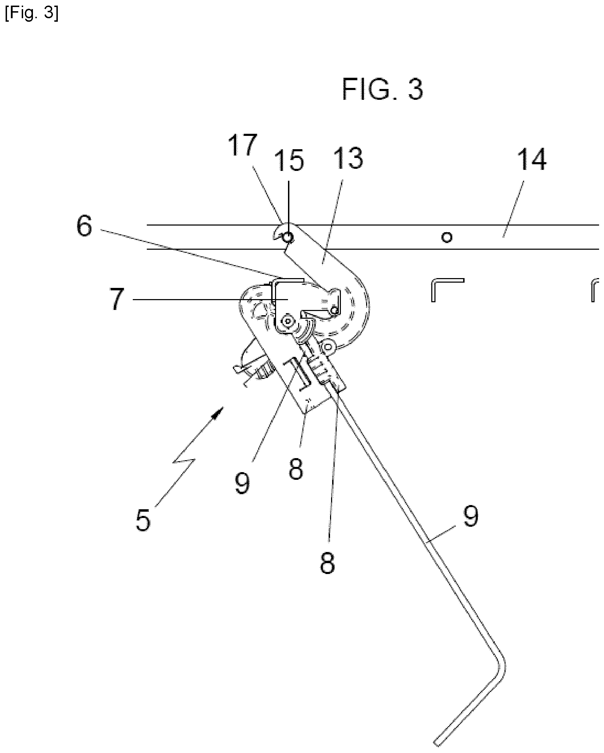

Pour assurer un déplacement du levier 131 pivotant en parallèle de la tringle 15, le levier 131 pivotant est couplé par encliquetage, c'est-à-dire par emboîtement par déformation élastique à la tringle 15. A cet effet, dans l'exemple représenté notamment à la figure 3, le levier 13 pivotant est muni à son extrémité libre d'un crochet 17 venant en prise avec la tringle 15.

Ce crochet 17 peut, comme dans les exemples représentés, être réalisé d'une seule pièce avec le levier 131 ou se présenter sous forme d'une pièce rapportée. Le crochet 17 a la forme d'un C avec chaque extrémité du C se prolongeant pour former une aile 18. Les ailes 18 forment entre elles un guide d'entrée en V débouchant à l'intérieur du C. Lesdites ailes 18 s'écartent au passage d'insertion de la tringle 15 à l'intérieur du C.

En pratique, et à l'état couplé de l'ensemble 5 de travail du sol à la traverse 6, le crochet 17 du levier 131 pivotant est disposé au-dessus de la tringle 15 et vient coiffer par le dessus la tringle 15. Il suffit, à l'état positionné du crochet au-dessus de la tringle 15 avec la tringle 15 dans le guide d'entrée du crochet, d'exercer une poussée sur le levier 131 pour amener le crochet 17 en prise avec la tringle 15 par logement de la tringle 15 à l'intérieur du C du crochet 17. Le montage est achevé.

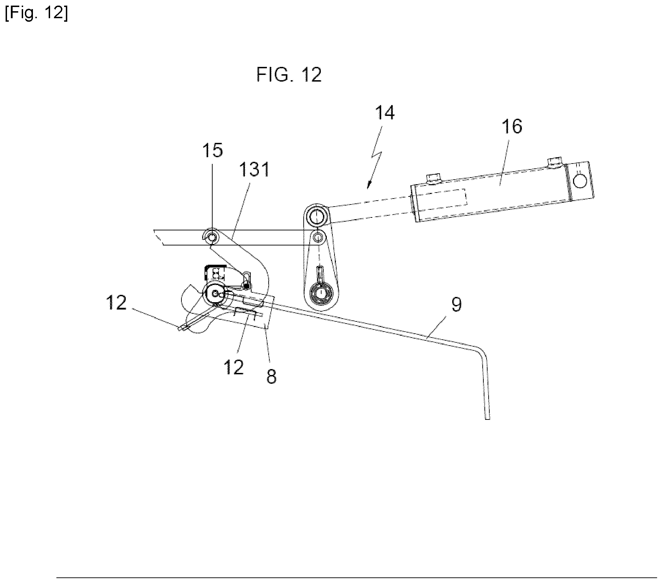

Pour parfaire la machine 1 de travail du sol, la chape 7 de fixation d'au moins l'un, ici en l'occurrence de chacun des ensembles 5 de travail du sol, à une traverse 6 du châssis 2 est munie d'un loquet 19 de verrouillage du bras 8 à la chape 7 dans une position dans laquelle l'outil 9 porté par le bras 8 est écarté du sol, cette position étant en particulier représentée à la figure 12.

Le loquet 19 est donc monté mobile entre une position active de verrouillage et une position inactive déverrouillée. La possibilité de verrouiller le bras porte-outil en position haute de l'outil permet à volonté de rendre inactif chaque outil de travail du sol porté par le bras.

Dans les exemples représentés, le loquet 19, qui est monté mobile à pivotement et à coulissement entre une position active de verrouillage et une position inactive déverrouillée, est un loquet coulissant suivant une direction parallèle à l'axe XX' de pivotement du bras 8 et un loquet pivotant autour d'un axe parallèle à l'axe XX' de pivotement du bras 8.

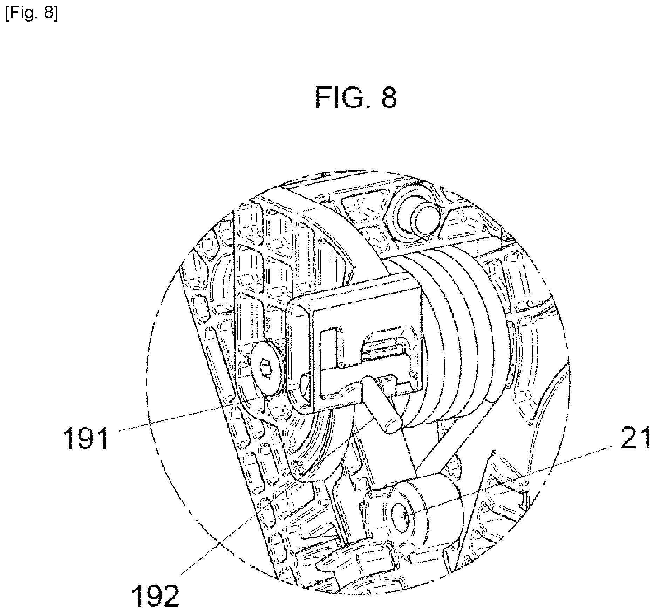

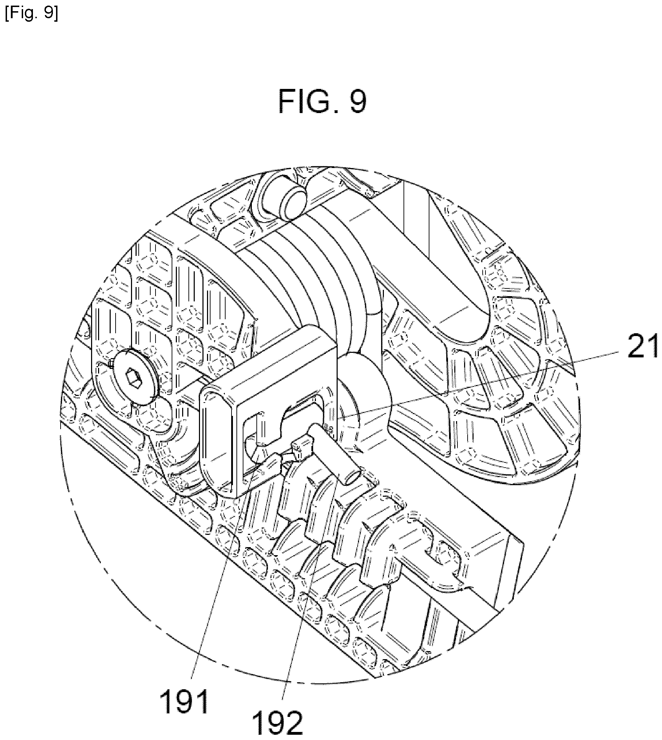

Comme illustré aux figures 8 et 9, ce loquet 19 a la forme d'un bout d'axe 191 muni d'un doigt 192 radial, et la chape 7 est munie d'un oeillet 21 à l'intérieur duquel le bout d'axe 191 s'insère au moins partiellement en position active de verrouillage dudit loquet 19.

Dans les exemples des figures 8 et 9, ce loquet 19 est logé dans une cavité ménagée à l'extrémité d'une partie saillante du U de la chape 7. Cette partie saillante s'étend au niveau de l'âme du U de la chape 7 en saillie de l'une des faces du U. L'extrémité de cette partie saillante ménage une cavité logeant au moins partiellement le loquet 19 de verrouillage.

Ce loquet 19 de verrouillage est, pour le passage d'une position à une autre, actionnable manuellement. Il suffit donc à un opérateur de déplacer à pivotement un bras porte-outil dans le sens d'un soulèvement et de déplacer à pivotement le loquet pour sortir le doigt 192 radial du loquet d'une première encoche ménagée au niveau de la cavité logeant au moins partiellement le loquet puis de déplacer à coulissement le loquet 19 jusqu'à introduction partielle du loquet 19 dans l'oeillet 21 porté par le bras 8 porte-outil avant de déplacer à nouveau à pivotement le loquet 19 pour introduire le doigt 192 radial dans une nouvelle encoche de la cavité afin d'éviter un déplacement axial intempestif du loquet 19 à l'état verrouillé.

Dans les exemples représentés, l'outil 9 de travail du sol de chaque ensemble 5 de travail du sol est une dent encore appelée pointe. Cette dent est formée par un fil métallique en L incliné tourné vers le sol, de sorte que l'une des extrémités du L peut pénétrer dans le sol.

La machine 1 de travail du sol ainsi obtenue est une herse encore appelée herse étrille. Bien évidemment, l'outil 9 de travail du sol aurait pu être constitué par un autre type d'outil, tel qu'une houe.

Grâce à la conception de la machine 1 de travail du sol telle que décrite ci-dessus, le bras porte-outil de chaque ensemble 5 de travail du sol peut, en configuration travail de la machine, c'est-à-dire lorsque le châssis est tracté et roule sur le sol et que l'outil de travail du sol est en contact avec le sol, pivoter lors de la rencontre avec un obstacle pour permettre d'éviter une casse de l'outil.

Ce déplacement à pivotement peut s'opérer de manière plus ou moins aisée en fonction de la précontrainte du ressort 10. Le réglage de cette précontrainte s'opère par simple déplacement à pivotement du levier 131 pivotant à l'aide de la tringle 15 en prise avec ledit levier 131 pivotant.

Plus le ressort est précontraint plus la force d'appui au sol de l'outil est élevée et plus il est difficile de déplacer à pivotement le bras porte-outil dans le sens d'un soulèvement.

Lorsque cela est nécessaire, le bras porte-outil peut être déplacé à pivotement jusqu'à une position haute dans laquelle l'outil est écarté du sol et le bras 8 porte-outil est verrouillé à la chape 7 par le loquet 19 de verrouillage.

## Revendications

1. Machine (1) de travail du sol comprenant un châssis (2) mobile avec une partie avant (3) et une partie arrière (4) pris par rapport au sens de déplacement du châssis (2) et des ensembles (5) de travail du sol, le châssis (2) présentant au moins une traverse (6) s'étendant transversalement à la direction avant/arrière du châssis (2), et au moins deux des ensembles (5) de travail du sol couplables à la traverse (6) comprenant chacun :
- une chape (7),
- un bras (8) porte-outil (9) monté sur la chape (7) à pivotement autour d'un axe parallèle à l'axe (XX') longitudinal de la traverse (6) à l'état couplé dudit ensemble (5) à la traverse (6), pour permettre notamment un effacement de l'outil (9) de travail du sol par soulèvement lors de la rencontre avec un obstacle,
- un ressort (10) de rappel du bras (8) en position d'appui au sol de l'outil (9) comprenant une partie dite intermédiaire spiralée (11) et deux branches (12) reliées entre elles par ladite partie spiralée (11) et,
- une structure (13) pivotante de précontrainte du ressort (10), le bras (8) pivotant couplé à l'une des branches (12) du ressort (10) et la structure (13) pivotante active par appui sur l'autre branche (12) du ressort (10) étant montés sur la chape (7) à pivotement autour d'un même axe autour duquel la partie spiralée (11) du ressort (10) est au moins partiellement enroulée, pour permettre à l'état entraîné en déplacement à pivotement de la structure (13) pivotante par au moins un dispositif (14) d'entraînement en déplacement équipant la machine (1) une précontrainte du ressort (10) en fonction des positions angulaires relatives du bras (8) et de la structure (13) pivotante, **caractérisée en ce que** pour la ou au moins l'une des traverses (6) du châssis, le ou au moins l'un des dispositifs (14) d'entraînement en déplacement équipant la machine (1) est commun au moins à plusieurs ensembles (5) de travail du sol disposés côte à côte et couplés à ladite traverse (6) et comprend au moins une tringle (15) parallèle à la traverse (6), un actionneur (16) d'entraînement en déplacement de la tringle (15) de manière parallèle à elle-même dans le sens d'un rapprochement ou d'un écartement de la partie avant (3) du châssis (2), **en ce que** la structure (13) pivotante des ensembles (5) de travail du sol montés sur la traverse (6) est un levier (131) pivotant couplable par encliquetage à la tringle (15) pour permettre en parallèle du déplacement de la tringle (15) un déplacement à pivotement des leviers (131) et **en ce que** chaque ensemble (5) de travail du sol porté par la traverse (6) est couplé de manière individuelle à la traverse (6) par au moins un organe (20) de liaison s'étendant entre la chape (7) dudit ensemble (5) de travail du sol et la traverse (6).

2. Machine (1) de travail du sol selon la revendication 1, **caractérisée en ce que** chaque levier (131) pivotant est pour son couplage par encliquetage, c'est-à-dire par emboîtement par déformation élastique, à la tringle (15), muni à son extrémité d'un crochet (17) venant en prise avec la tringle (15).

3. Machine (1) de travail du sol selon la revendication 2, **caractérisée en ce que** ledit crochet (17) a la forme d'un C avec chaque extrémité du C se prolongeant pour former une aile (18), lesdites ailes (18) divergentes depuis les extrémités du C formant entre elles un guide d'entrée en V débouchant à l'intérieur du C, lesdites ailes (18) s'écartant au passage d'insertion de la tringle (15) à l'intérieur du C.

4. Machine (1) de travail du sol selon l'une des revendications 2 ou 3, **caractérisée en ce que** ledit crochet (17) vient coiffer par le dessus la tringle (15).

5. Machine (1) de travail du sol selon l'une des revendications 1 à 4, **caractérisée en ce que** la chape (7) de fixation d'au moins l'un des ensembles (5) de travail du sol à la ou l'une des traverses (6) du châssis (2) est munie d'au moins un loquet (19) de verrouillage du bras (8) à la chape (7) dans une position dans laquelle l'outil (9) porté par le bras (8) est écarté du sol, ce loquet (19) étant monté mobile entre une position active de verrouillage et une position inactive déverrouillée.

6. Machine (1) de travail du sol selon la revendication 5, **caractérisée en ce que** le loquet (19) qui est monté mobile à pivotement et à coulissement entre une position active de verrouillage et une position inactive déverrouillée est un loquet coulissant suivant une direction parallèle à l'axe (XX') de pivotement du bras (8), et pivotant autour d'un axe parallèle à l'axe (XX') de pivotement du bras (8).

7. Machine (1) de travail du sol selon l'une des revendications 5 ou 6, **caractérisée en ce que** le loquet (19) a la forme d'un bout d'axe (191) muni d'un doigt (192) radial et **en ce que** la chape (7) est munie d'un oeillet (21) à l'intérieur duquel le bout d'axe (191) s'insère au moins partiellement en position active de verrouillage dudit loquet (19).

8. Machine (1) de travail du sol selon l'une des revendications 1 à 7, **caractérisée en ce que** l'outil (9) de travail du sol d'au moins deux des ensembles (5) de travail du sol couplables à la traverse (6) est une dent pour conférer à la machine (1) de travail du sol une fonction de herse.

9. Machine (1) de travail du sol selon l'une des revendications 1 à 8, **caractérisée en ce que** la chape (7) d'au moins deux des ensembles (5) de travail du sol couplables à la traverse (6) est une chape (7) avec une partie en forme de U, le ressort (10), le bras (8) et la structure (13) pivotante étant disposés au moins partiellement entre les branches du U et l'organe (20) de liaison de la chape (7) à la traverse (6) étant disposé au niveau de l'âme du U.

10. Machine (1) de travail du sol selon l'une des revendications 1 à 9, **caractérisée en ce qu'**au moins la chape (7), le bras (8) et la structure (13) pivotante d'au moins deux des ensembles (5) de travail du sol couplables à la traverse (6) sont des pièces moulées en matière de synthèse.

## Patentansprüche

1. Bodenbearbeitungsmaschine (1), umfassend einen beweglichen Rahmen (2) mit einem vorderen Teil (3) und einem hinteren Teil (4) bezogen auf die Bewegungsrichtung des Rahmens (2), und Bodenbearbeitungseinheiten (5), wobei der Rahmen (2) mindestens eine Querstrebe (6) aufweist, die sich quer zu der Vor- /Rückwärtsrichtung des Rahmens (2) erstreckt, und wobei mindestens zwei der Bodenbearbeitungseinheiten (5), die mit der Querstrebe (6) koppelbar sind, jeweils Folgendes umfassen:
- einen Gabelkopf (7),
- einen Arm (8) als Werkzeugträger (9), der auf dem schwenkbaren Gabelkopf (7) um eine Achse parallel zu der Längsachse (XX') des Querträgers (6) in dem gekoppelten Zustand der Einheit (5) mit dem Querträger (6) montiert ist, um insbesondere ein Zurückziehen des Bodenbearbeitungswerkzeugs (9) durch Anheben beim Auftreffen auf ein Hindernis zu ermöglichen,
- eine Rückholfeder (10) des Arms (8) in die Position, in der das Werkzeug (9) auf dem Boden aufliegt, umfassend einem sogenannten spiralförmigen Zwischenteil (11) und zwei Schenkel (12), die durch den spiralförmigen Teil (11) miteinander verbunden sind, und,
- eine schwenkbare Struktur (13) zum Vorspannen der Feder (10), wobei der Schwenkarm (8), der mit einem der Schenkel (12) der Feder (10) gekoppelt ist, und die schwenkbare Struktur (13), die durch Abstützung auf dem anderen Schenkel (12) der Feder (10) aktiv ist, an dem Gabelkopf (7) um dieselbe Achse schwenkbar montiert sind, um die der spiralförmige Teil (11) der Feder (10) zumindest teilweise gewickelt ist, um in dem Zustand, der durch mindestens eine die Maschine (1) ausrüstenden Verschiebungsantriebsvorrichtung (14) zur Schwenkbewegung der Schwenkstruktur (13) angetrieben wird, eine Vorspannung der Feder (10) abhängig von den relativen Winkelpositionen des Arms (8) und der Schwenkstruktur (13) zu ermöglichen, **dadurch gekennzeichnet, dass** für den oder mindestens einen der Querträger (6) des Rahmens, die oder mindestens eine der die Maschine (1) ausrüstenden Verschiebungsantriebsvorrichtungen (14) mindestens mehreren Bodenbearbeitungsaggregaten (5) gemeinsam ist, die nebeneinander angeordnet und mit dem Querträger (6) gekoppelt sind, und mindestens ein Gestänge (15) parallel zu dem Querträger (6), einen Antrieb (16) zum Verschiebungsantrieb des Gestänges (15) parallel zu sich selbst in Richtung einer Annäherung oder einer Entfernung des vorderen Teils (3) des Rahmens (2) umfasst, dass die Schwenkstruktur (13) der auf dem Querträger (6) montierten Bodenbearbeitungsanordnungen (5) ein schwenkbarer Hebel (131) ist, der durch Einrasten mit dem Gestänge (15) koppelbar ist, um parallel zu der Bewegung des Gestänges (15) eine Schwenkbewegung der Hebel (131) zu ermöglichen, und dass jede von dem Querträger (6) getragene Bodenbearbeitungsanordnung (5) durch mindestens ein Verbindungsorgan (20), das sich zwischen dem Gabelkopf (7) der Bodenbearbeitungsanordnung (5) und dem Querträger (6) erstreckt, individuell mit dem Querträger (6) gekoppelt ist.

2. Bodenbearbeitungsmaschine (1) nach Anspruch 1, **dadurch gekennzeichnet, dass** jeder Schwenkhebel (131) für seine Kopplung durch Einrasten, d. h. durch Ineinandergreifen durch elastische Verformung, an das Gestänge (15) an seinem Ende mit einem Haken (17) versehen ist, der mit dem Gestänge (15) in Eingriff kommt.

3. Bodenbearbeitungsmaschine (1) nach Anspruch 2, **dadurch gekennzeichnet, dass** der Haken (17) die Form eines C aufweist, wobei jedes Ende des C verlängert ist, um einen Flügel (18) zu bilden, wobei die von den Enden des C divergierenden Flügel (18) untereinander eine V-förmige Eingangsführung bilden, die in das Innere des C mündet, wobei die Flügel (18) an dem Einführdurchgang des Gestänges (15) in das Innere des C auseinandergehen.

4. Bodenbearbeitungsmaschine (1) nach einem der Ansprüche 2 oder 3, **dadurch gekennzeichnet, dass** der Haken (17) das Gestänge (15) von oben abdeckt.

5. Bodenbearbeitungsmaschine (1) nach einem der Ansprüche 1 bis 4, **dadurch gekennzeichnet, dass** der Gabelkopf (7) zur Befestigung mindestens einer der Bodenbearbeitungseinheiten (5) an dem oder einem der Querträger (6) des Rahmens (2) mit mindestens einem Riegel (19) zum Verriegeln des Arms (8) an dem Gabelkopf (7) in einer Position versehen ist, in der das von dem Arm (8) getragene Werkzeug (9) vom Boden entfernt ist, wobei diese Klinke (19) beweglich zwischen einer aktiven Verriegelungsposition und einer inaktiven entriegelten Position montiert ist.

6. Bodenbearbeitungsmaschine (1) nach Anspruch 5, **dadurch gekennzeichnet, dass** die Klinke (19), die zwischen einer aktiven Verriegelungsposition und einer inaktiven entriegelten Position schwenkbar und verschiebbar montiert ist, eine Klinke ist, die in einer Richtung parallel zu der Schwenkachse (XX') des Arms (8) verschiebbar ist und um eine Achse parallel zu der Schwenkachse (XX') des Arms (8) schwenkbar ist.

7. Bodenbearbeitungsmaschine (1) nach einem der Ansprüche 5 oder 6, **dadurch gekennzeichnet, dass** die Klinke (19) die Form eines Bolzenendes (191) aufweist, das mit einem radialen Finger (192) versehen ist, und dass der Gabelkopf (7) mit einer Öse (21) versehen ist, in deren Inneres das Bolzenende (191) zumindest teilweise in die aktive Verriegelungsposition der Klinke (19) eingreift.

8. Bodenbearbeitungsmaschine (1) nach einem der Ansprüche 1 bis 7, **dadurch gekennzeichnet, dass** das Bodenbearbeitungswerkzeug (9) von mindestens zwei der mit dem Querträger (6) koppelbaren Bodenbearbeitungseinheiten (5) ein Zahn ist, um der Bodenbearbeitungsmaschine (1) eine Eggenfunktion zu verleihen.

9. Bodenbearbeitungsmaschine (1) nach einem der Ansprüche 1 bis 8, **dadurch gekennzeichnet, dass** der Gabelkopf (7) von mindestens zwei der mit dem Querträger (6) koppelbaren Bodenbearbeitungseinheiten (5) ein Gabelkopf (7) mit einem U-förmigen Abschnitt ist, die Feder (10), der Arm (8) und die schwenkbare Struktur (13) zumindest teilweise zwischen den Schenkeln des U angeordnet sind und das Organ (20) zur Verbindung des Gabelkopfs (7) mit dem Querträger (6) auf der Höhe des Stegs des U angeordnet ist.

10. Bodenbearbeitungsmaschine (1) nach einem der Ansprüche 1 bis 9, **dadurch gekennzeichnet, dass** zumindest der Gabelkopf (7), der Arm (8) und die schwenkbare Struktur (13) von zumindest zwei der mit dem Querträger (6) koppelbaren Bodenbearbeitungseinheiten (5) Formteile aus synthetischem Material sind.

## Claims

1. A machine (1) for working the ground comprising a movable chassis (2) with a front part (3) and a rear part (4) considered relative to the movement direction of the chassis (2) and assemblies (5) for working the ground, the chassis (2) having at least one crosspiece (6) extending transversely to the front/back direction of the chassis (2), and at least two assemblies (5) for working the ground which can be coupled to the crosspiece (6) each comprising:
- a yoke (7),
- a tool-holder (9) arm (8) mounted on the yoke (7) such that it can pivot about an axis parallel to the longitudinal axis (XX') of the crosspiece (6) when said assembly (5) is coupled to the crosspiece (6), in particular to allow the tool (9) for working the ground to be retracted by lifting when it encounters an obstacle,
- a spring (10) for returning the arm (8) to the position of the tool (9) bearing on the ground comprising a so-called spiral intermediate part (11) and two branches (12) which are connected to one another by said spiral part (11), and
- a pivoting structure (13) for prestressing the spring (10), the pivoting arm (8) coupled to one of the branches (12) of the spring (10) and the active pivoting structure (13) by bearing on the other branch (12) of the spring (10) being mounted on the yoke (7) able to pivot about the same axis around which the spiral part (11) of the spring (10) is at least partially wound, to allow, when the pivoting structure (13) is made to pivot by at least one movement-driving device (14) equipping the machine (1), prestressing of the spring (10) based on relative angular positions of the arm (8) and the pivoting structure (13), **characterized in that** for the or at least one of the crosspieces (6) of the chassis, the or at least one of the movement-driving devices (14) equipping the machine (1) is common to at least several assemblies (5) for working the ground arranged side by side and coupled to said crosspiece (6) and comprises at least one rod (15) parallel to the crosspiece (6), an actuator (16) moving the rod (15) parallel to itself in the direction moving closer to or further from the front part (3) of the chassis (2), **in that** the pivoting structure (13) of the assemblies (5) for working the ground mounted on the crosspiece (6) is a pivoting lever (131) which can be coupled by snapping-fitting to the rod (15) to allow, in parallel with the movement of the rod (15), a pivoting movement of the levers (131), and **in that** each assembly (5) for working the ground supported by the crosspiece (6) is coupled individually to the crosspiece (6) by at least one connecting member (20) extending between the yoke (7) of said assembly (5) for working the ground and the crosspiece (6).

2. The machine (1) for working the ground according to claim 1, **characterized in that** each pivoting lever (131) is, for coupling by snapping-fitting thereof, that is to say, by interlocking by elastic deformation, provided with the rod (15), equipped at its end with a hook (17) engaging with the rod (15).

3. The machine (1) for working the ground according to claim 2, **characterized in that** said hook (17) is in the shape of a C with each end of the C being extended to form a wing (18), said wings (18) diverging from the ends of the C forming a V-shaped inlet guide therebetween emerging inside the C, said wings (18) moving away from the insertion passage of the rod (15) inside the C.

4. The machine (1) for working the ground according to one of claims 2 or 3, **characterized in that** said hook (17) covers the top of the rod (15).

5. The machine (1) for working the ground according to one of claims 1 to 4, **characterized in that** the yoke (7) for attaching at least one of the assemblies (5) for working the ground to the or one of the crosspieces (6) of the chassis (2) is provided with at least one latch (19) for locking the arm (8) to the yoke (7) in a position wherein the tool (9) carried by the arm (8) is moved away from the ground, this latch (19) being mounted movably between an active locked position and an inactive unlocked position.

6. The machine (1) for working the ground according to claim 5, **characterized in that** the latch (19) which is mounted pivotably and slidably between an active locked position and an inactive unlocked position is a latch sliding in a direction parallel to the pivot axis (XX') of the arm (8), and pivoting about an axis parallel to the pivot axis (XX') of the arm (8).

7. The machine (1) for working the ground according to one of claims 5 or6, **characterized in that** the latch (19) is in the form of an axle end (191) provided with a radial finger (192) and **in that** the yoke (7) is provided with an eyelet (21) inside which the axle end (191) is inserted at least partially in the active locked position of said latch (19).

8. The machine (1) for working the ground according to one of claims 1 to 7, **characterized in that** the tool (9) for working the ground of at least two of the assemblies (5) for working the ground which can be coupled to the crosspiece (6) is a tooth for conferring a harrow function on the machine (1) for working the ground.

9. The machine (1) for working the ground according to one of claims 1 to 8, **characterized in that** the yoke (7) of at least two of the assemblies (5) for working the ground which can be coupled to the crosspiece (6) is a yoke (7) with a U-shaped part, the spring (10), the arm (8) and the pivoting structure (13) being arranged at least partially between the branches of the U and the member (20) for connecting the yoke (7) to the crosspiece (6) being arranged at the core of the U.

10. The machine (1) for working the ground according to one of claims 1 to 9, **characterized in that** at least the yoke (7), the arm (8) and the pivoting structure (13) of at least two of the assemblies (5) for working the ground which can be coupled to the crosspiece (6) are molded parts made from a synthetic material.
